# EUROPEAN PATENT APPLICATION

(11) **EP 4 745 016 A1**
(43) Date of publication of application: **20.05.2026**
(21) Application number: 24216606.4
(22) Date of filing: 29.11.2024
(51) Int. Cl.: B62K 3/00, B60T 8/17, B60T 8/176, B60T 8/32, B60T 8/36, B62K 21/02, B62L 1/00, B62L 3/00, B62L 3/02

(54) **FORK BRACKET**

(30) Priority: 15.11.2024 US 202418949300
(71) Applicant: Mobility Holdings, Limited, New Taipei City 24159 (TW)
(72) Inventor: GOUDRAND, Antoine, 24159 New Taipei City (TW); UIMONEN, Joakim, 20360 Turku (FI); HUNG LIN, Eric Yi, 24159 New Taipei City (TW); CHANG, Allen, 24159 New Taipei City (TW); LIAO, KG, 24159 New Taipei City (TW)
(74) Representative: Ripamonti, Enrico

(57) **Abstract**

A bracket and associated method for a cycle ABS for a cycle that has a fork and that has a front wheel rotatably connected to the fork. The fork has at least one attachment point at a rearward segment of the fork. The bracket includes a first portion engaging with, and attaching to, the at least one attachment point at the rearward segment of the fork. The bracket includes a second portion extending from the rearward segment of the fork to a forward segment of the fork. The bracket includes a third portion engaging with, and attaching to, the ABS at a location adjacent to the forward segment of the fork to hold the ABS forward of the fork.

## Description

### TECHNICAL FIELD

The present disclosure is directed towards a bracket for a wheeled implement or cycle, such as a bicycle, electric bicycle, motorcycle, moped or similar, that has an Anti-lock Brake System (ABS).

### BACKGROUND

Wheeled implements/cycles, such as bicycles, electric bicycles, motorcycles, mopeds or similar, may each include a disc brake system. Such a disc brake system may include an Anti-lock Brake System (ABS).

A disc of a disc brake system is located near/adjacent to a rotational hub of a wheel of a wheeled implement/cycle. The disc rotates with an associated wheel about the hub. Brake pads, calipers and other associated structures of the disc brake system are located adjacent to the disc, and are thus also located near/adjacent to a rotational hub. The brake pads, calipers and other associated structures are secured/mounted to non-rotational structure(s) of the wheeled implement/cycle. For example, the non-rotational structure of the wheeled implement/cycle may be a fork upon which the wheel is supported for rotation via the hub.

An ABS is a portion of disc brake system that has some significant size in comparison to some relevant portions of the wheeled implement/cycle. For example, the ABS has a relatively significant size in comparison to the brake pads, calipers and other associated structures.

For a disc brake system located at a front wheel of a wheeled implement/cycle having a fork supporting the wheel, it is common to locate the brake pads, calipers and other associated structures at a location secured/mounted to a rearward/aft side of the fork. It is known to mount an ABS on the rearward/aft side of the fork to be in close proximity to the brake pads, calipers and other associated structures located on the rearward/aft side of the fork.

Locks for wheeled implements/cycles, such as bicycles, electric bicycles, motorcycles, mopeds or similar, are useful to help prevent theft when such a wheeled implement/cycle is left unattended. However, carriage/storage of such a lock during use (e.g., travel) of the wheeled implement/cycle may pose an issue.

### SUMMARY

This summary is provided to introduce a selection of concepts in a simplified form that are further described below in the detailed description. This summary is not intended to identify key factors or essential features of the claimed subject matter, nor is it intended to be used to limit the scope of the claimed subject matter.

In accordance with one or more aspects, the present disclosure provides a bracket for a cycle Anti-lock Brake System (ABS) for a cycle that has a fork and that has a front wheel rotatably connected to the fork. The fork has at least one attachment point at a rearward segment of the fork. The bracket includes a first portion engaging with, and attaching to, the at least one attachment point at the rearward segment of the fork. The bracket includes a second portion extending from the rearward segment of the fork to a forward segment of the fork. The bracket includes a third portion engaging with, and attaching to, the ABS at a location adjacent to the forward segment of the fork to hold the ABS forward of the fork.

In accordance with one or more aspects, the present disclosure provides a cycle that includes a fork and a front wheel rotatably connected to the fork. The fork has a forward segment, a rearward segment and at least one attachment point at the rearward segment. The cycle includes an Anti-lock Brake System (ABS) and a bracket. The bracket includes a first portion engaged with, and attached to, the at least one attachment point at the rearward segment of the fork. The bracket includes a second portion extending from the rearward segment of the fork to the forward segment of the fork. The bracket includes a third portion engaged with, and attached to, the ABS at a location adjacent to the forward segment of the fork to hold the ABS forward of the fork.

In accordance with one or more aspects, the present disclosure provides a method of attaching an Anti-lock Brake System (ABS) to a cycle having a fork and having a front wheel rotatably connected to the fork. The method includes providing the cycle to have at least one attachment point at a rearward segment of the fork. The method includes providing a bracket. The method includes engaging and attaching a first portion of the bracket with the at least one attachment point at the rearward segment of the fork. The method includes locating a second portion of the bracket to extend from the rearward segment of the fork to a forward segment of the fork. The method includes engaging and attaching a third portion of the bracket to the ABS at a location adjacent to the forward segment of the fork to hold the ABS forward of the fork.

The following description and annexed drawings set forth certain illustrative aspects and implementations. These are indicative of but a few of the various ways in which one or more aspects may be employed. Other aspects, advantages, and/or novel features of the disclosure will become apparent from the following detailed description when considered in conjunction with the annexed drawings.

### DESCRIPTION OF THE DRAWINGS

FIG. 1 is a torn-away, side view of a portion of an example wheeled implement, or simply cycle, (e.g., a bicycle, electric bicycle, motorcycle, moped or similar) including a bracket for a cycle Anti-lock Brake System (ABS) in accordance with one or more aspects of the present disclosure. FIG. 1 also shows a bracket for a lock in accordance with one or more aspects of the present disclosure.
FIG. 2 is a side view similar to FIG. 1, but accentuating, via viewing transparently through adjacent structures, the bracket for the ABS and the bracket for the lock, and with some portions (e.g., brake pads and calipers) of the brake system removed.
FIG. 3 is a perspective view similar to FIG. 2 accentuating, via viewing transparently through adjacent structures, the bracket for the ABS and the bracket for the lock, and with some portions (e.g., brake pads and calipers) of the brake system removed.
FIG. 4 is an enlarged portion side view similar to FIGS. 1 and 2.
FIG. 5 is a view similar to FIGS. 1 and 2, but with some portions (e.g., the ABS, the bracket for the ABS, the lock and the bracket for the lock) exploded away from their normal positions, with trace lines added to show mounting/bolting paths and with some portions (e.g., brake pads and calipers) of the brake system removed.
FIG. 6 is a perspective view similar to FIG. 5, with some portions (e.g., the ABS, the bracket for the ABS, the lock and the bracket for the lock) exploded away from their normal positions, with trace lines added to show mounting/bolting paths and with some portions (e.g., brake pads and calipers) of the brake system removed.
FIG. 7 is an enlarged side view of an example bracket for a wheeled implement/cycle ABS in accordance with one or more aspects of the present disclosure.
FIG. 8 is a reverse side view of the bracket of FIG. 7.
FIG. 9 is a front, in relation to a fore-aft axis of the wheeled implement/cycle, view of the bracket of FIG. 7.
FIG. 10 is a rear or aft, in relation to a fore-aft axis of the wheeled implement/cycle, view of the bracket of FIG. 7.
FIG. 11 is a top view of the bracket of FIG. 7.
FIG. 12 is a bottom view of the bracket of FIG. 7.
FIG. 13 is an enlarged perspective view of an example bracket for a lock in accordance with one or more aspects of the present disclosure.
FIG. 14 is a side view of the bracket of FIG. 13.
FIG. 15 is a front/fore, in relation to a fore-aft axis of the wheeled implement/cycle, view of the bracket of FIG. 13.
FIG. 16 is a rear/aft, in relation to a fore-aft axis of the wheeled implement/cycle, view of the bracket of FIG. 13.

### DETAILED DESCRIPTION

The claimed subject matter is now described with reference to the drawings, wherein like reference numerals are used to refer to like elements throughout. In the following description, for purposes of explanation, numerous specific details are set forth in order to provide an understanding of the claimed subject matter. It is evident, however, that the claimed subject matter may be practiced without these specific details. In other instances, structures and devices are illustrated in schematic or block diagram form in order to facilitate describing the claimed subject matter. Relative size, orientation, etc. of parts, components, etc. may differ from that which is illustrated while not falling outside of the scope of the claimed subject matter.

It is to be appreciated that, in one or more non-limiting examples, the present disclosure provides a bracket for a cycle Anti-lock Brake System (ABS) for a cycle that has a fork and that has a front wheel rotatably connected to the fork. The fork has at least one attachment point at a rearward segment of the fork. The bracket includes a first portion engaging with, and attaching to, the at least one attachment point at the rearward segment of the fork. The bracket includes a second portion extending from the rearward segment of the fork to a forward segment of the fork. The bracket includes a third portion engaging with, and attaching to, the ABS at a location adjacent to the forward segment of the fork to hold the ABS forward of the fork.

Also, it is to be appreciated that, in one or more non-limiting examples, the present disclosure provides a cycle that includes a fork and a front wheel rotatably connected to the fork. The fork has a forward segment, a rearward segment and at least one attachment point at the rearward segment. The cycle includes an Anti-lock Brake System (ABS) and a bracket. The bracket includes a first portion engaged with, and attached to, the at least one attachment point at the rearward segment of the fork. The bracket includes a second portion extending from the rearward segment of the fork to the forward segment of the fork. The bracket includes a third portion engaged with, and attached to, the ABS at a location adjacent to the forward segment of the fork to hold the ABS forward of the fork.

Also, it is to be appreciated that, in one or more non-limiting examples, the present disclosure provides a method of attaching an Anti-lock Brake System (ABS) to a cycle having a fork and having a front wheel rotatably connected to the fork. The method includes providing the cycle to have at least one attachment point at a rearward segment of the fork. The method includes providing a bracket. The method includes engaging and attaching a first portion of the bracket with the at least one attachment point at the rearward segment of the fork. The method includes locating a second portion of the bracket to extend from the rearward segment of the fork to a forward segment of the fork. The method includes engaging and attaching a third portion of the bracket to the ABS at a location adjacent to the forward segment of the fork to hold the ABS forward of the fork.

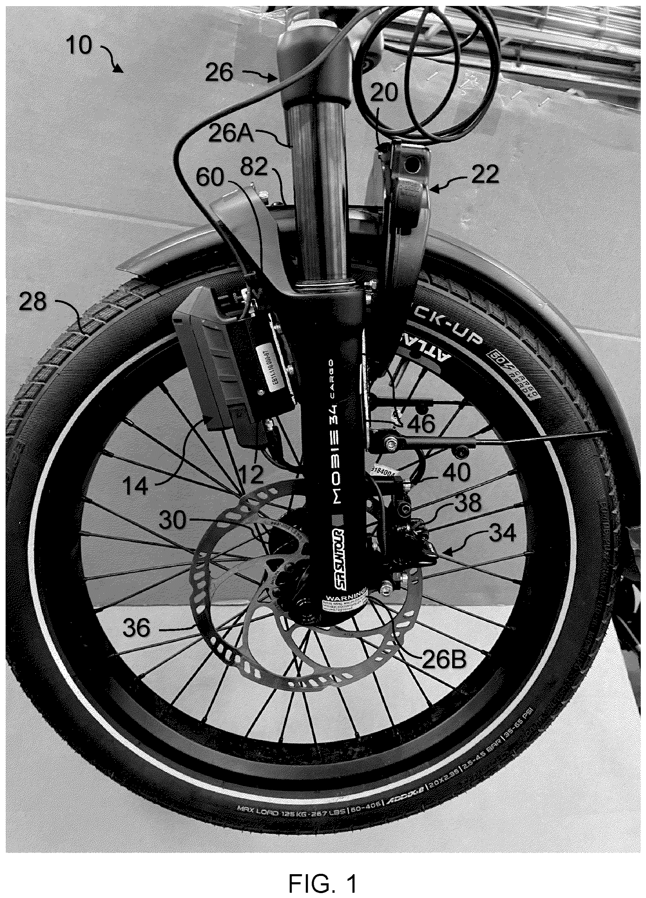

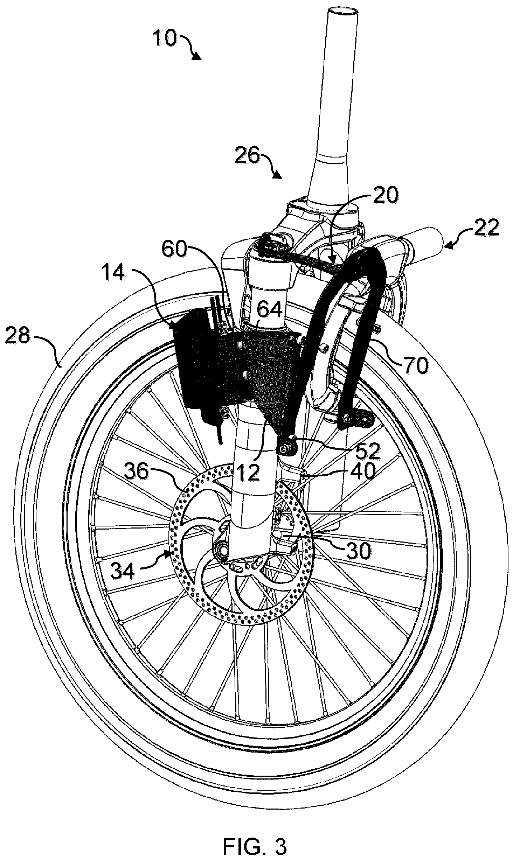

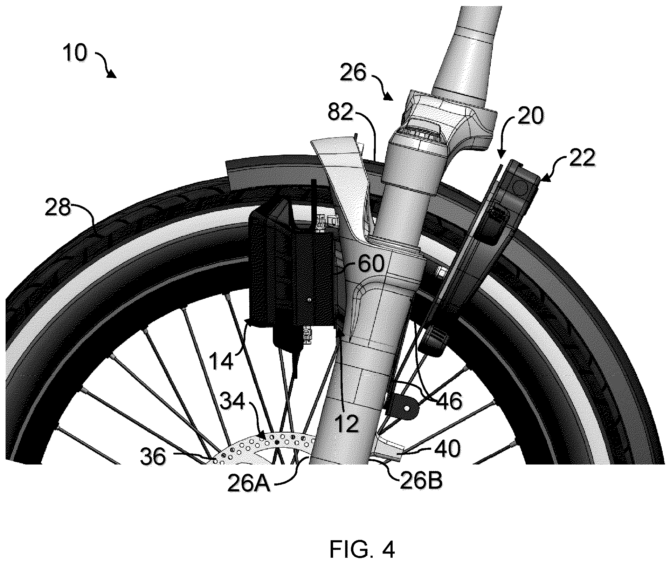

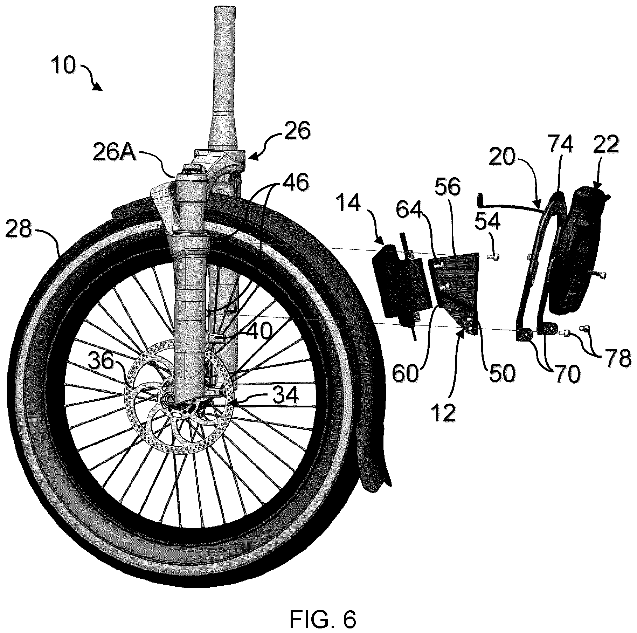

Referring to FIGS. 1-6, a portion of an example wheeled implement/cycle 10 is shown. Also, shown within FIGS. 1-6 is an example of a bracket 12 for a wheeled implement/cycle Anti-lock Brake System (ABS) 14 in accordance with one or more aspect of the present disclosure. Further, shown within FIGS. 1-6 is an example of a bracket 20 for a security lock 22 in accordance with one or more aspect of the present disclosure. The example brackets 12, 20 will be described further following.

Focusing upon the wheeled implement/cycle 10, it is to be appreciated that the shown portion is part of a complete wheeled implement/cycle 10. It is to be appreciated that the complete wheeled implement/cycle 10 is not shown. To be sure, a person of ordinary skill in the art appreciates that the portion is of a complete wheeled implement/cycle and that the present disclosure provides support for such. Herein, reference to the wheeled implement/cycle 10 is a reference to the complete wheeled implement/cycle, unless specifically stated to be to just a portion.

Herein, it to be appreciated that the terms "wheeled implement" and "cycle" are to be broadly interpreted (i.e., many devices may be with the penumbra of such terms). Moreover, the terms "wheeled implement" and "cycle" may be used interchangeably. Also, just a single term (e.g., "cycle") may be used for shorthand and not as an indication that there is any limitation away from the broad interpretation that is to be applied to the two interchangeable terms. Hereinafter, the term "cycle" is used for shorthand/brevity, rather than the longer phrase "wheeled implement/cycle."

Within the shown example, the example cycle 10 may be a bicycle. However, such is a non-limiting example and the cycle 10 may be something other than a bicycle, such as an electric bicycle, motorcycle, moped or similar. Thus, it is to be appreciated that a bicycle is just one example of the cycle 10 and that various different cycles are possible, contemplated and within the scope of the present disclosure. The term cycle (and thus wheeled implement) is to be broadly interpreted to include various examples, including but not limited to bicycle, electric bicycle, motorcycle, moped or similar.

The cycle 10 (e.g., a bicycle, etc.) includes a frame structure, which includes a turnable/steerable fork or yoke 26, and plural ground-engaging wheels 28 (only one wheel is shown due to the tear-away in the figures). Within an example, the cycle 10 includes multiple (e.g., two) ground-engaging wheels 28. It is to be appreciated that two ground-engaging wheels 28 is just one example and that various/different numbers (e.g., three, four, etc.) of wheels 28 are possible, contemplated and within the scope of the present disclosure.

The cycle 10 includes various other structures. For example, the cycle 10 may include structures (e.g., a seat or saddle) for one or more persons to ride in/upon the cycle. The cycle 10 may include structures (e.g., handlebars) for steering or directing the cycle (e.g., turning of the fork 26). The cycle 10 may include structures for motivating the cycle. Examples of such structures for motivating may include a manually operated arrangement (e.g., foot pedals and a drive link/chain) to drive at least one wheel, a motor arrangement (e.g., electric, fuel operated, etc.) and associated drive link/chain to drive at least one wheel, etc. The cycle 10 may include structures to permit the cycle to be folded (e.g., for transport, storage, etc.). The cycle 10 may include many other structures. All various/other structures, and variations for constructions and configurations thereof, are possible, contemplated and within the scope of the present disclosure.

Focusing upon the frame, and the fork 26 thereof, the frame may have a variety of constructions and configurations. Some or all of the frame may be metal (e.g., steel), but other materials (e.g., composites, possibly with fibers, etc.) are possible, contemplated and within the scope of the present disclosure. In part, the frame may vary dependent upon the type of cycle (e.g., bicycle, motorcycle, moped, etc.), the number of wheels, etc. The variety of constructions and configurations are possible, contemplated and within the scope of the present disclosure.

Within the shown example, the shown example wheel 28 is located within the fork (yoke) 26 of the frame. Specifically, the wheel/fork have a hub arrangement 30 to permit the wheel 28 to rotate relative to the fork 26. The hub arrangement 30 may include various types of structures such as an axle, bearings, rollers and the like. In general for the hub arrangement 30, an axle is mounted/fixed relative to the fork. A hub portion is rotatable relative to the axle/fork with the overall wheel 28. To be sure, a variety of constructions and configurations for the wheel 28 and the hub arrangement 30 are possible, contemplated and within the scope of the present disclosure.

It is to be appreciated that the cycle 10, overall, has a forward/fore/front portion and a rearward/aft portion. Also, the parts of the cycle 10 also have respective forward/fore/front portions and rearward/aft/rear portions. Such designations (e.g., fore and aft, and similars) are based upon forward and rearward directions when viewing the cycle proceeding in a forward direction. So, the designations (e.g., fore and aft, and similar) are considered in the reference frame of the overall cycle. Within FIGS 1-6, the forward side or direction is to the left and the rearward side or direction is to the right. Within the shown example, the shown wheel 28 is a front/fore wheel and is steerable wheel via movement of the fork 26.

Such fore and aft, and similar, designations are simply a designation convention based upon the typical direction is which the cycle 10 (e.g., bicycle, etc.) moves during operation. Of course, it is to be appreciated that it is possible that the cycle 10 could be operated in reverse (i.e., to move in a reverse direction). However, such reverse direction operation would normally occur only a minimal amount of time and need not disturb a fore-aft designation convention for the cycle 10. With the fore-aft designation convention being appreciated, it is to be further appreciated that any line extending between the forward portion and the aft portion may be considered to be along a fore-aft direction.

The cycle 10 includes at least one disc brake system 34. A disc 36 of the brake system 34 is mounted for rotation with the wheel 28. With the shown example, the disc 36 is mounted to the hub portion 30. A piston/caliper/pad arrangement 38 (only shown in FIG. 1) of the brake system 34 is mounted to the fork 26 adjacent to the disc 36. The fork 26 has mounting portions 40 for receiving bolts to fixedly mount the piston/caliper/pad arrangement 38 to the fork. To be sure, a variety of constructions and configurations for the brake system 34, and the disc 36 and piston/caliper/pad arrangement 38, and mounting thereof, are possible, contemplated and within the scope of the present disclosure.

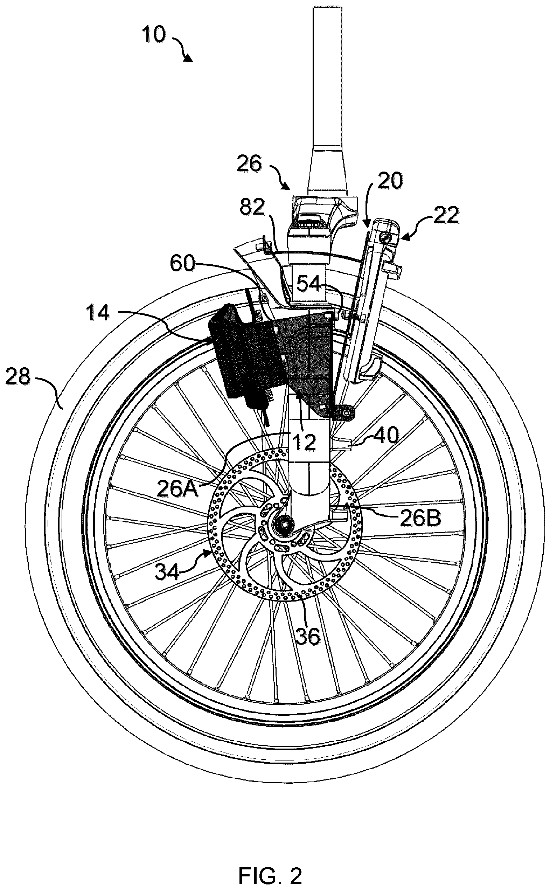

It is to be noted that the piston/caliper/pad arrangement 38 of the brake system 34 is generally complete as shown in FIG. 1. However, the piston/caliper/pad arrangement 38 is omitted from FIGS. 2-6. The mounting portions 40 upon the fork 26 are present in FIGS. 1-6 and thus represent the location of the piston/caliper/pad arrangement 38.

As can be appreciated, the disc 36 is positioned with a portion of the disc located between the pads of the piston/caliper/pad arrangement 38. The pads are movable to press against the disc 36 via movement of the caliper. Such movement is caused via the piston providing force. Fluid (i.e., brake fluid) is supplied to the piston to provide the movement/pressing force. Accordingly, the pads are pressed against the disc 36 in order to provide a cycle-slowing/stopping function. The slowing/stopping results from friction between the pads and the disc 36 and a function of applied force via the fluid supplied to the piston as mentioned above.

To be sure, the above-discussed structures and operations are provided as a top-level example. Various and different specific examples of structures and operations are contemplated and are within the scope of the present disclosure. The person of ordinary skill in the art understands the construction and function of a disc brake system 34. Moreover, the person of ordinary skill in the art appreciates a broad interpretation scope and the many variations that are possible.

It is to be noted that the piston/caliper/pad arrangement 38 of the brake system 34 is mounted to the fork 26 at the rearward/aft side of the fork. It is worth noting that the mounting portions 40 upon the fork 26 are at the rearward/aft side of the fork. As viewed, within FIGS. 1-6, the location of the piston/caliper/pad arrangement 38 and the mounting portions 40 therefor are at the right (i.e., the rearward/aft) side of the fork 26.

It is to be appreciated that the shown example cycle 10 includes the ABS 14. A function of the ABS 14 is to help prevent the braking system 34 from locking during a braking function and thus to help prevent the associated wheel 28 from locking (i.e., ceasing to be able to have at least some rotation). Such lock-prevention may help avoid slippage of the wheel 28 relative to ground (e.g., pavement). Moreover, such lock-prevention may help to maintain a controlled engagement between the wheel 28 and the ground. The person of ordinary skill in the art understands and appreciates the function, and associated structure of an ABS 14. Within a non-limiting example, an ABS may be available from Robert Bosch GmbH.

To be sure, the above-discussion of an ABS 14, and associated operations and structures, are provided as a top-level example. Various and different specific examples of an ABS are contemplated and are within the scope of the present disclosure. The person of ordinary skill in the art understands and appreciates a broad scope regarding operations and structures for the ABS 14. Moreover, the person of ordinary skill in the art appreciates a broad interpretation scope and the many variations that are possible.

It is to be appreciated that the ABS 14 is operationally connected to the piston/caliper/pad arrangement 38. As mentioned, the piston/caliper/pad arrangement 38 is mounted to the fork 26 at the rearward/aft side of the fork. In accordance with at least one aspect of the present disclosure the bracket 12 for the ABS 14 is provided. Within at least one aspect of the present disclosure, the bracket 12 retains the ABS 14 at a forward/fore side (left as viewed in FIGS. 1-6) of the fork 24 (e.g., opposite to the location of the piston/caliper/pad arrangement 38, which is located on the rearward/aft side of the fork). So, within at least one aspect of the present disclosure, the bracket 12 retains the ABS 14 at a location on a side (e.g., fore/forward) of the fork 26 opposite to the location (e.g., rear/aft) of the piston/caliper/pad arrangement 38.

Within an example, the fork 26 has at least one attachment point 46 at a rearward (e.g., right as viewed in FIGS. 1-6) segment of the fork. It is to be appreciated that multiple attachment points 46 are contemplated and shown within the example of FIGS. 1-6. Within the shown example, two attachment points 46 are presented for each of the left side and the right side of the fork 26. Each of such at least one attachment point 46 may include a surface with one or more fastener-receiving holes, bracket(s), or other structure(s).

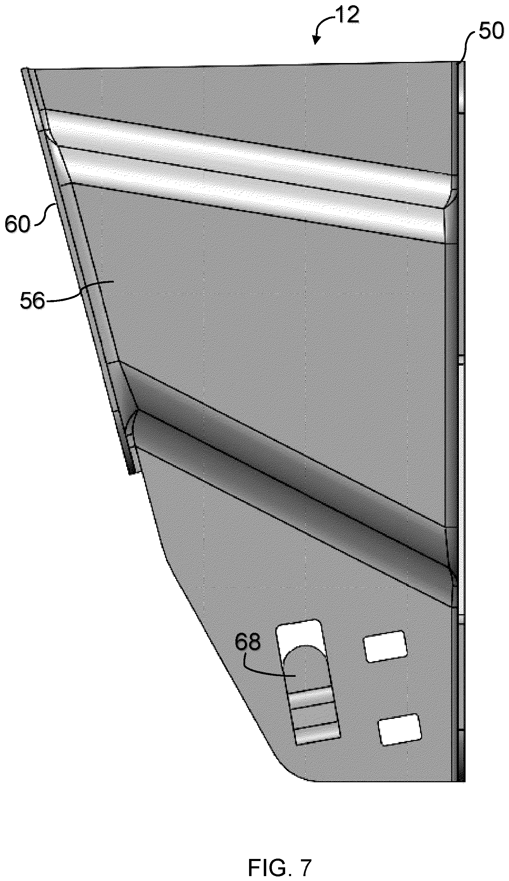

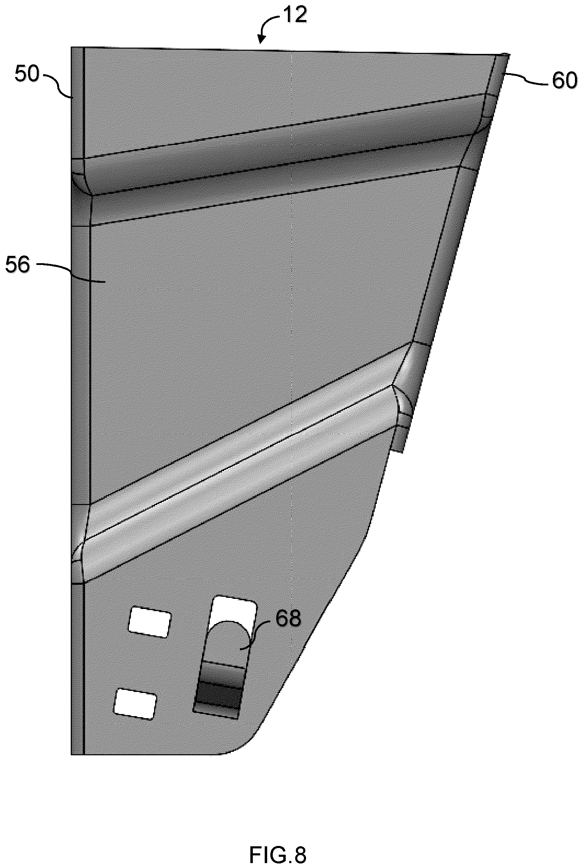

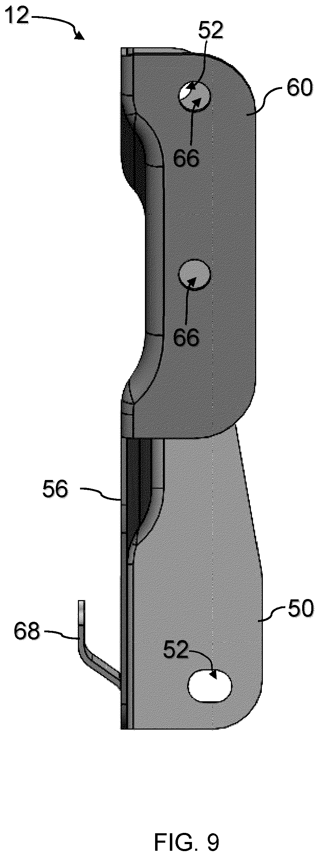

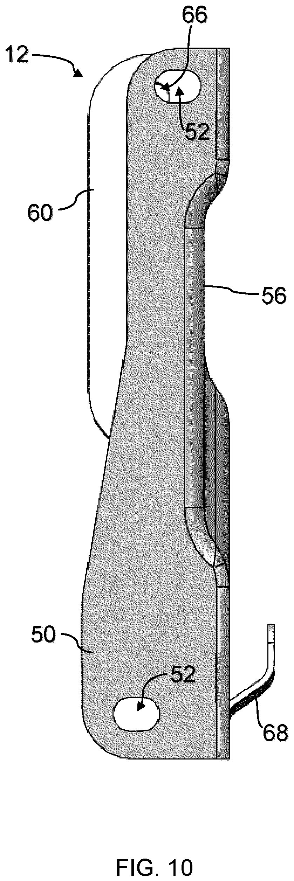

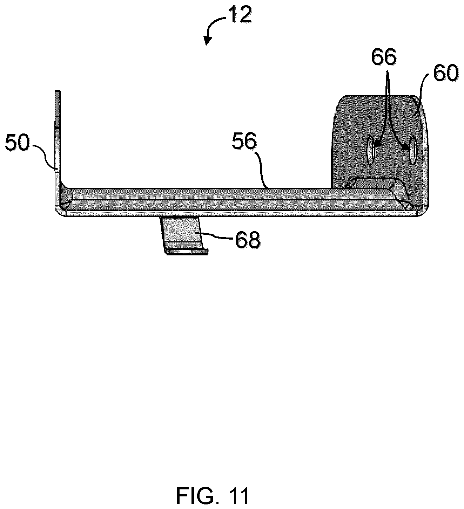

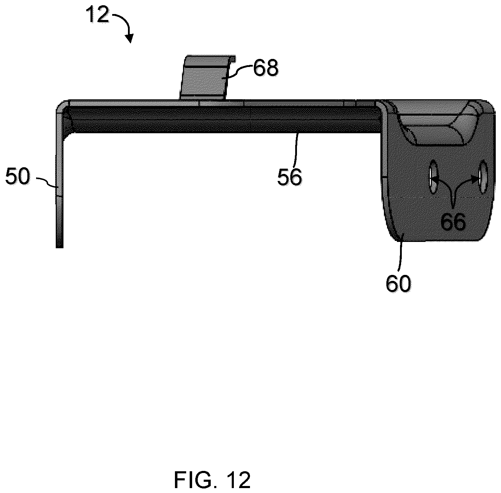

A non-limiting example bracket 12 is shown within FIGS. 7-12. In accordance with at least an aspect of the present disclosure, the bracket 12 includes a first portion 50 engaging with, and attaching to, the at least one attachment point 46 at the rearward segment of the fork 26. Within an example, the first portion 50 of the bracket 12 abuts against a portion of the rearward segment of the fork 26, with the rearward segment being part of the at least one attachment point 46. The first portion 50 of the bracket 12 may be plate-like. Within an example, the fork 26 has at least one hole/aperture, which is part of the at least one attachment point 46, for receiving at least one fastener (e.g., a threaded screw or bolt) 54. Within an example, the bracket 12 has at least one hole/aperture 52 for receiving at least one fastener (e.g., a threaded screw or bolt) 54. See for example FIGS. 9 and 10 for example holes/aperture(s) 52 in the first portion 50 of the bracket 12.

Tightening the fastener(s) 54 secures the bracket 12, at the first portion 50, to the fork 26. It is to be appreciated that the attachment point 46 at a rearward segment of the fork 26 and the first portion 50 of the bracket 12 may have varied constructions and configurations. Such varied constructions and configurations may be associated with accomplishing the engagement with, and attachment, of the first portion 50 to the at least one attachment point 46 at the rearward segment of the fork 26.

In accordance with at least an aspect of the present disclosure, the bracket 12 includes a second portion 56 extending from the first portion 50 of the of the bracket. Within an example, the second portion 56 extends generally perpendicular to the first portion 50. The second portion 56 of the of the bracket 12 is located to extend from an area of the rearward segment 26B of the fork 26 to an area of the forward segment 26A of the fork. Within an example, the second portion 56 of the bracket 12 is located inboard (inside) of the fork 26, and between a portion (e.g., a left or right portion) of the fork and the associated wheel 28. Within an example, the second portion 56 of the bracket 12 may be plate-like, but may also have contoured segments, etc. Within an example, the second portion 56 is sized and shaped so as to not interfere with operation of the wheel 28 located within the fork 26. Within an example, the second portion 56 is relatively thin (e.g., thinner than the fork, the wheel, etc.).

It is to be appreciated that the second portion 56 of the bracket 12 may have varied constructions and configurations. Such varied constructions and configurations may be associated with accomplishing the engagement with, and attachment, of the first portion 50 to the at least one attachment point 46 at the rearward segment of the fork 26.

In accordance with at least an aspect of the present disclosure, the bracket 12 includes a third portion 60 engaging with, and attaching to, the ABS 14 at a location adjacent to the forward segment 26A of the fork 26 to hold the ABS forward of the fork. Within an example, the third portion 60 of the bracket 12 abuts against a portion of the ABS 114. The third portion 60 of the bracket 12 may be plate-like. Within an example, the third portion 60 extends generally perpendicular to the second portion 56.

Within an example, each of the third portion 60 of the bracket 12 and the ABS 14 has at least one aperture/opening for receiving at least one fastener (e.g., a threaded screw or bolt) 64. See for example FIGS. 9-12 for example aperture(s)/opening 66 in the third portion 60 of the bracket 12.

Tightening the fastener(s) 64 secures the ABS 14 to the third portion 60 of the bracket 12. It is to be appreciated that the ABS 14 and the third portion 60 of the bracket 12 may have varied constructions and configurations. Such varied constructions and configurations may be associated with accomplishing the engagement with, and attachment, of the first portion 50 to the at least one attachment point 46 at the rearward segment of the fork 26.

Within an example, the first portion 50 of the bracket 12 has a greater vertical (i.e., transverse to the fore-aft direction) length than a vertical length of the third portion 60 of the bracket 12. Within an example, the first portion 50 of the bracket 12 is not parallel to the third portion 60 of the bracket 12. Within an example, the first portion 50 of the bracket 12 is at an angle that is skewed with respect to the third portion 60 of the bracket 12. Within an example, a bottom end of the third portion 60 of the bracket 12 is closer to the first portion 50 than a top end of the third portion 60.

Within an example, the second portion 56 of the bracket 12 has a general trapezoid shape. The trapezoid shape has a relatively short side at the forward side of the second portion 56 as compared to a relatively longer side at the rearward side of the second portion 56.

Within an example, the bracket 12 is made of metal. However, other materials are possible, contemplated and within the scope of the present disclosure. Within an example, the bracket 12 is made via stamping and/or bending. However, other manufacturing steps/techniques are possible, contemplated and within the scope of the present disclosure.

It is to be appreciated that the example bracket 12 shown within FIGS. 7-12 is a non-limiting example of the bracket 12. Variations are possible, contemplated and within the scope of the present disclosure.

It is to be appreciated that optional structure(s), function(s), etc. for the bracket 12 are possible, contemplated and within the scope of the present disclosure. As an example of such an optional structure, and associated function is present within the example of FIGS. 7-12. The shown example optional structure, and associated function, is a stamped-out line holder 68, which can hold a line extending to the ABS (e.g., between the ABS and the piston/caliper/pad arrangement, or some other portion of the cycle). Other optional structures, etc. may include holes, etc. for fasteners or the like.

It is to be appreciated that the bracket 12 may be provided in accordance with at least an aspect of the present disclosure. It is also to be appreciated that, in accordance with at least an aspect of the present disclosure, a cycle (e.g., 10) includes a fork (e.g., 26) and a front wheel (e.g., 28) rotatably connected to the fork. The fork (e.g., 26) has a forward segment (e.g., 26A), a rearward segment (e.g., 26B) and at least one attachment point (e.g., 46) at the rearward segment. The cycle (e.g., 10) includes an Anti-lock Brake System (ABS) (e.g., 14) and a bracket (e.g., 12). The bracket (e.g., 12) includes a first portion (e.g., 50) engaged with, and attached to, the at least one attachment point (e.g., 46) at the rearward segment of the fork (e.g., 26). The bracket (e.g., 12) includes a second portion (e.g., 56) extending from the rearward segment of the fork (e.g., 26) to the forward segment (26A) of the fork. The bracket (e.g., 12) includes a third portion (e.g., 60) engaged with, and attached to, the ABS (e.g., 14) at a location adjacent to the forward segment (26A) of the fork (e.g., 26) to hold the ABS forward of the fork.

It is also to be appreciated that, in accordance with at least an aspect of the present disclosure, a method of attaching an Anti-lock Brake System (ABS) (e.g., 14) to a cycle (e.g., 10), which has a fork (e.g., 26) and a front wheel (e.g., 28) rotatably connected to the fork, is provided. The method includes providing the cycle (e.g., 26) to have at least one attachment point (e.g., 46) at a rearward segment (e.g., 26B) of the fork (e.g., 26). The method includes providing a bracket (e.g., 12). The method includes engaging and attaching a first portion (e.g., 50) of the bracket (e.g., 12) with the at least one attachment point (e.g., 46) at the rearward segment (e.g., 26B) of the fork (e.g., 26). The method includes locating a second portion (e.g., 56) of the bracket (e.g., 12) to extend from the rearward segment (e.g., 26B) of the fork (e.g., 26) to a forward segment (e.g., 26A) of the fork. The method includes engaging and attaching a third portion (e.g., 60) of the bracket (e.g., 12) to the ABS (e.g., 14) at a location adjacent to the forward segment (e.g., 26A) of the fork (e.g., 26) to hold the ABS forward of the fork.

It is to be appreciated that the lock 22 may be associated with the cycle 10. Within an example, the lock 22 may be for locking around a portion of the wheel 28 to prevent rotation of the wheel. Within an example, the lock 22 may be activated to move a portion of the lock to a lock position interposed between portions (e.g., spokes or similar) of the wheel 28. With such portion in the lock position, the portion may block movement (e.g., rotation) of the wheel portions (e.g., spokes).

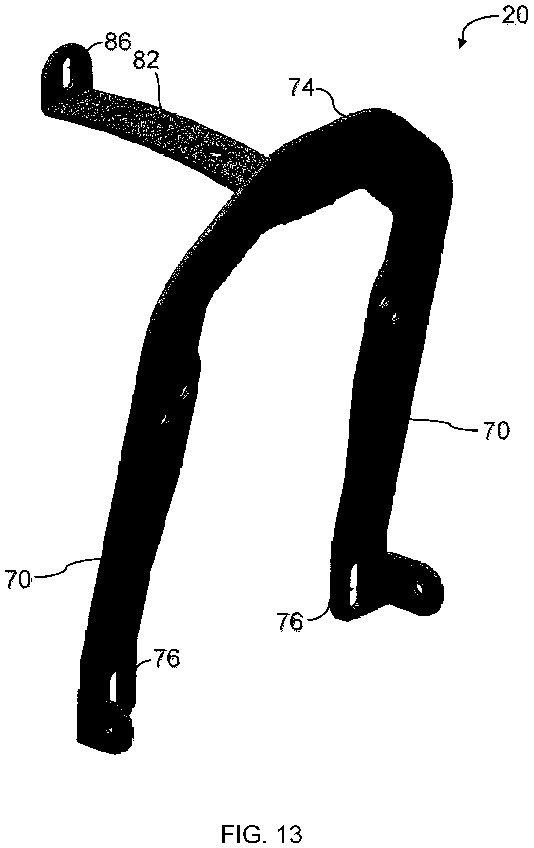

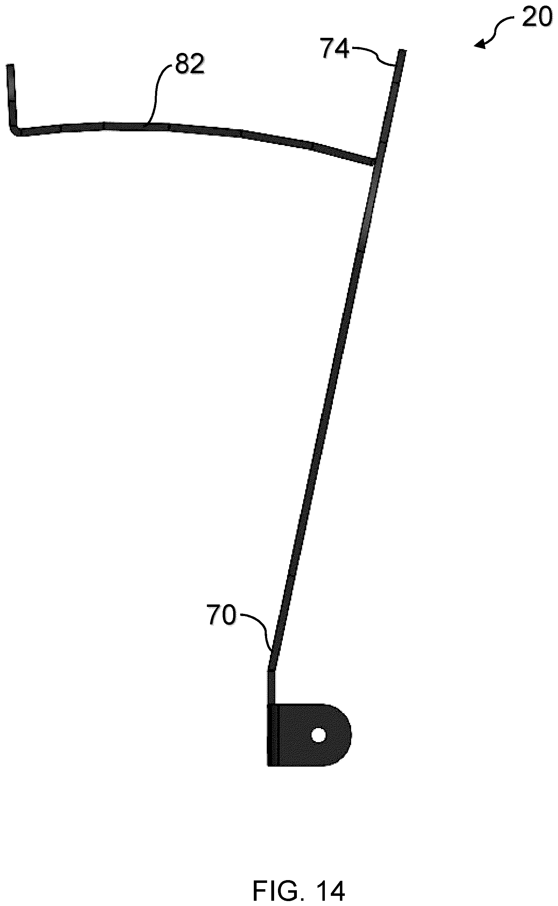

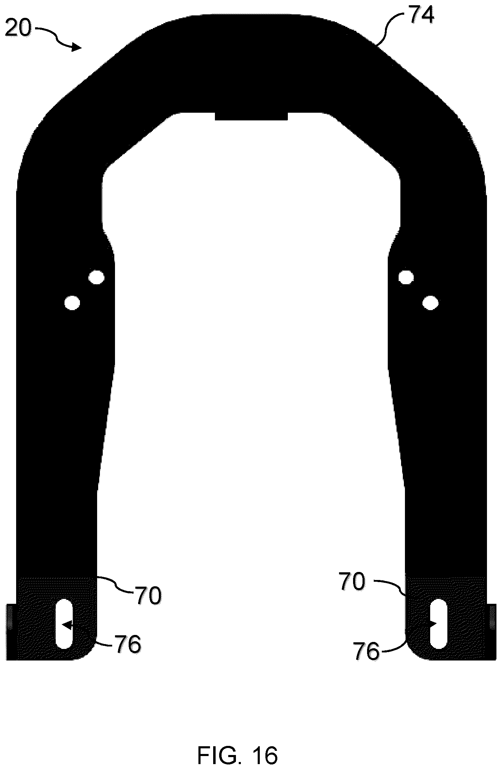

In accordance with at least an aspect of the present disclosure, the lock bracket 20 is for supporting/retaining the lock 22 relative to the wheel 28 and other portions of the cycle 10 may be provided. The lock bracket 20 supports/retains (e.g., holds) the lock 22 at a location rearward of the fork 26. The lock 22 is thus retained/held at a fore-aft location opposite to the location of the ABS 14 which forward of the fork 26. A non-limiting example lock bracket 20 is shown within FIGS. 13-16.

Within the shown example, the lock bracket 20 has a general horseshoe shape, with two extending legs 70. The legs 70 are positioned on opposite (e.g., left and right) sides of a portion of the wheel 28. A yoke portion 74 of the lock bracket 20 interconnects the two leg 70. The lock 22 may be connected/secured to the lock bracket 20 at one or more locations.

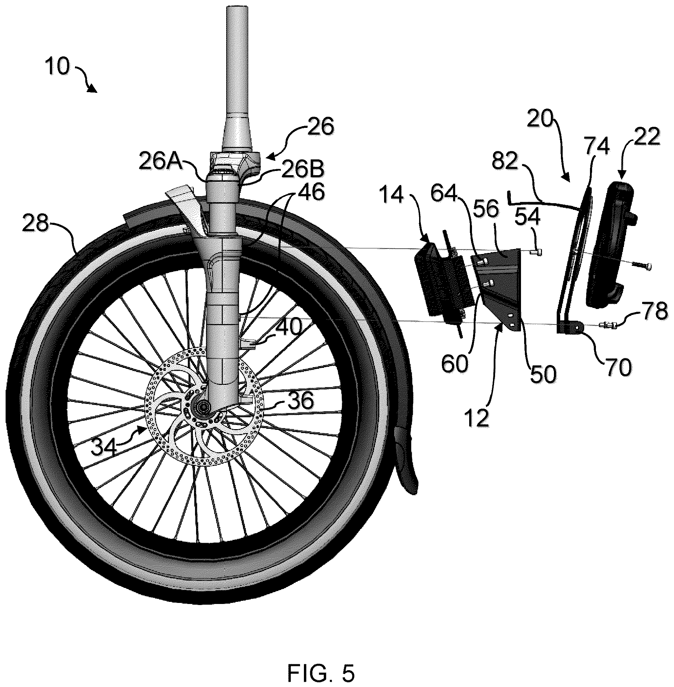

The lock bracket 20, for holding/retaining the lock 22, is connected/secured to the fork 26 of the cycle 10 at one or more locations (e.g., see fastener(s) for example in FIG. 5). Within the shown example, the lock bracket 20 includes at least one hole/aperture 76 (see FIGS. 13, 15 and 16 for examples) for receiving a respective fastener 78 that extends into a portion of the fork 26 of the cycle 10. Within an example, each leg 70 of the lock bracket 20 includes a hole/aperture (e.g., 76) for receiving a respective fastener 78 that extends into a portion of the fork 26.

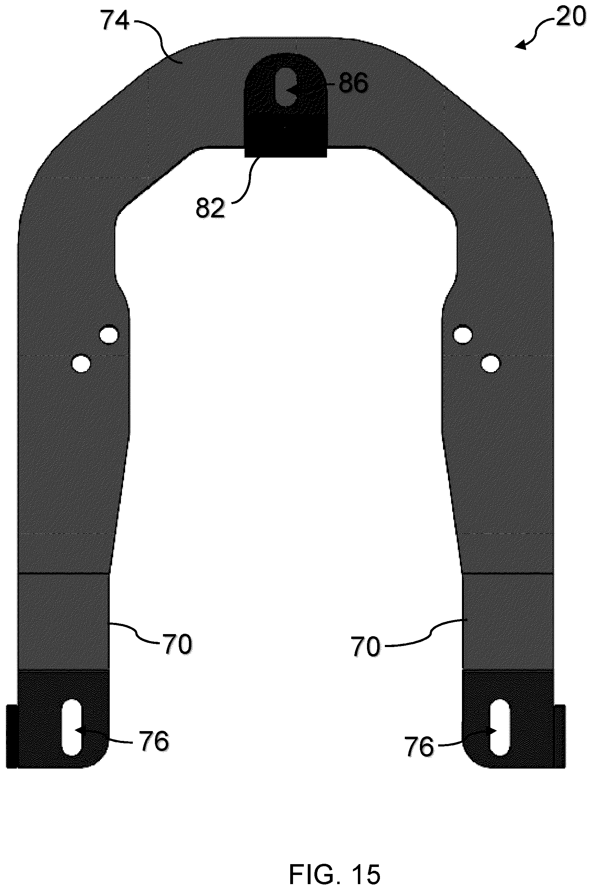

Within an example, the bracket also includes a center stay attachment arm 82 locate at the yoke portion 74 of the lock bracket 20. The attachment arm 82 includes at least one hole 86 (see for example FIGS. 13 and 15) for receiving a respective fastener that extends into a portion of the fork 26 of the cycle 10. It is to be appreciated that the presence, construction and configuration of the attachment arm 82 may be dependent and varied based upon the construction and configuration of the cycle 10 and the fork 26 thereof.

Within an example, the lock bracket 20 is made of metal. However, other materials are possible, contemplated and within the scope of the present disclosure. Within an example, the lock bracket 20 is made via stamping and/or bending. However, other manufacturing steps/techniques are possible, contemplated and within the scope of the present disclosure.

It is to be appreciated that the example shown within FIGS. 13-16 is a non-limiting example of the lock bracket 20. It is to be appreciated that optional structure(s), function(s), etc. for the lock bracket 20 are possible, contemplated and within the scope of the present disclosure. As some non-limiting examples, the lock bracket 20 may include holes/apertures, appendages (e.g., tabs), etc.

Within an example in which both the bracket 12 (hereinafter the ABS bracket 12) and the lock bracket 20 are present, at least some of the holes 52 in the ABS bracket 12 utilized for connecting the ABS bracket to the fork 26 and at least some of the holes 76 in the lock bracket utilized for connecting the lock bracket to the fork are aligned (e.g., overlapped). Fastener(s) (e.g., 76) may extend through the aligned (e.g., overlapped) holes of the ABS bracket 12 and the lock bracket 20 to connect (e.g., secure) both the ABS bracket and the lock bracket to the fork 26 and thus the overall cycle 10.

It is to be appreciated that the broad interpretations and options are within the scope of the present disclosure.

As mentioned, it is contemplated that examples presented within the present disclosure are non-limiting. The details are such non-limiting examples and are provided only to illustrate just one, of many, options to provide the device. Again, many options for providing the device are contemplated and are within the scope of the present disclosure.

It is to be appreciated and understood that all of the discussed examples within the scope of the present disclosures are usable alone or in combinations. Moreover, all of the examples within the scope of the present disclosure are usable within various use environments. Accordingly, such variations, options, etc. are within the scope of the present disclosure. All of the terms, phrases, etc. are to be broadly interpreted.

It is to be appreciated that various examples and/or aspects are provided by the present disclosure. Some of such are presented above. Other examples are contemplated and are with the scope of the present disclosure.

Although the subject matter has been described in language specific to structural features or methodological acts, it is to be understood that the subject matter defined in the appended claims is not necessarily limited to the specific features or acts described above. Rather, the specific features and acts described above are disclosed as example forms of implementing at least some of the claims.

Various operations of embodiments are provided herein. The order in which some or all of the operations described should not be construed to imply that these operations are necessarily order dependent. Alternative ordering will be appreciated having the benefit of this description. Further, it will be understood that not all operations are necessarily present in each embodiment provided herein. Also, it will be understood that not all operations are necessary in some embodiments.

Many modifications may be made to the instant disclosure without departing from the scope or spirit of the claimed subject matter. Unless specified otherwise, "first," "second," or the like are not intended to imply a temporal aspect, a spatial aspect, an ordering, etc. Rather, such terms are merely used as identifiers, names, etc. for features, elements, items, etc. For example, a first location and a second location correspond to location A and location B or two different or two identical locations or the same location.

Moreover, "exemplary" and/or the like is used herein to mean serving as an example, instance, illustration, etc., and not necessarily as advantageous. As used in this application, "or" is intended to mean an inclusive "or" rather than an exclusive "or". In addition, "a" and "an" as used in this application are to be construed to mean "one or more" unless specified otherwise or clear from context to be directed to a singular form. Also, at least one of A and B or the like means A or B or both A and B. Furthermore, to the extent that "includes", "having", "has", "with", or variants thereof are used in either the detailed description or the claims, such terms are intended to be inclusive in a manner similar to "comprising".

Also, although the disclosure has been illustrated and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above-described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure. In addition, while a particular feature of the disclosure may have been disclosed with respect to only one of several implementations, such feature may be combined with one or more other features of the other implementations as may be desired and advantageous for any given or particular application.

## Claims

1. A bracket (12) for a cycle Anti-lock Brake System (ABS, 14) for a cycle (10) having a fork (26) and having a front wheel (28) rotatably connected to the fork (26), the fork (26) having at least one attachment point (46) at a rearward segment of the fork (26), the bracket (12) comprising:
a first portion (50) engaging with, and attaching to, the at least one attachment point (46) at the rearward segment of the fork (26);
a second portion (56) extending from the rearward segment of the fork (26) to a forward segment of the fork (26); and
a third portion (60) engaging with, and attaching to, the ABS (14) at a location adjacent to the forward segment of the fork (26) to hold the ABS (14) forward of the fork (26).

2. The bracket (12) as set forth within claim 1, wherein the second portion (56) extends generally perpendicular to the first portion (50).

3. The bracket (12) as set forth within claim 1, wherein the third portion (60) extends generally perpendicular to the second portion (56).

4. The bracket (12) as set forth within claim 1, wherein the at least one attachment point (46) of the fork (26) includes structure for receiving a fastener (54), and the first portion (50) includes structure (52) for receiving the fastener (54).

5. The bracket (12) as set forth within claim 1, wherein the cycle (10) has a brake system (34) that includes a piston/caliper/pad arrangement (38) located at a rearward side of the fork (26), the bracket (12) retains the ABS (14) at a forward side of the fork (26).

6. The bracket (12) as set forth within claim 1, wherein the first portion (50) is non-parallel to the third portion (60).

7. The bracket (12) as set forth within claim 1, wherein the bracket (12) is an ABS bracket (12), the cycle (10) includes a security lock (22) and a lock bracket (20) for retaining the security lock (22), each of the ABS bracket (12) and the lock bracket (20) have a respective hole (52, 76), with the holes being aligned to receive a fastener (78).

8. The bracket (12) as set forth within claim 7, wherein the lock bracket (20) holds the lock (22) at a location rearward of the fork (26) to be at a fore-aft side opposite to the location of the ABS (14) held by the third portion (60) of the ABS bracket (12).

9. A cycle comprising:
a fork (26), the fork (26) having a forward segment, a rearward segment and at least one attachment point (46) at the rearward segment;
a front wheel (28) rotatably connected to the fork (26);
an Anti-lock Brake System (ABS); and
the bracket (12) as set forth in claim 1.

10. The cycle as set forth within claim 9, wherein the second portion (56) extends generally perpendicular to the first portion (50).

11. The cycle as set forth within claim 9, wherein the third portion (60) extends generally perpendicular to the second portion (56).

12. The cycle as set forth within claim 9, wherein the cycle (10) has a brake system (34) that includes a piston/caliper/pad arrangement (38) located at a rearward side of the fork (26), the bracket (12) retains the ABS (14) at a forward side of the fork (26).

13. The cycle as set forth within claim 9, wherein the first portion (50) is non-parallel to the third portion (60).

14. The cycle as set forth within claim 9, wherein the bracket (12) is an ABS bracket (12), the cycle (10) includes a security lock (22) and a lock bracket (20) for retaining the security lock (22), each of the ABS bracket (12) and the lock bracket (20) have a respective hole (52, 76), with the holes being aligned to receive a fastener (78).

15. A method of attaching an Anti-lock Brake System (ABS, 14) to a cycle (10) having a fork (26) and having a front wheel (28) rotatably connected to the fork (26), the method comprising:
providing the cycle (10) to have at least one attachment point (46) at a rearward segment of the fork (26);
providing a bracket (12);
engaging and attaching a first portion (50) of the bracket (12) with the at least one attachment point (46) at the rearward segment of the fork (26);
locating a second portion (56) of the bracket (12) to extend from the rearward segment of the fork (26) to a forward segment of the fork (26); and
engaging and attaching a third portion (60) of the bracket to the ABS (14) at a location adjacent to the forward segment of the fork (26) to hold the ABS (14) forward of the fork (26).
